# EUROPEAN PATENT APPLICATION

(11) **EP 4 417 821 A1**
(43) Date of publication of application: **21.08.2024**
(21) Application number: 22918394.2
(22) Date of filing: 20.12.2022
(51) Int. Cl.: F16B 5/02

(54) **FIRST CONNECTOR, CONNECTING ASSEMBLY, AND CONNECTING SYSTEM**

(30) Priority: 09.01.2022 CN 202210018877
(71) Applicant: Guangzhou Jinio Technology Development Co., Ltd., Guangzhou, Guangdong 510700 (CN)
(72) Inventor: LIN, Xiaoqun, Guangzhou, Guangdong 510700 (CN); LIN, Xiaohuan, Guangzhou, Guangdong 510700 (CN); SU, Weisheng, Guangzhou, Guangdong 510700 (CN); GUO, Yuwu, Guangzhou, Guangdong 510700 (CN)
(74) Representative: Bayramoglu et al.
(86) International application number: PCT/CN2022/140185
(87) International publication number: WO 2023/130950

(57) **Abstract**

The present invention discloses a first connector, a connecting assembly and a connecting system. The first connector includes a first connector body, and one side of the first connector body protrudes to form a connecting boss, the other side of a connector body is provided with a mounting part, the mounting part is used to be locked in the first mounting hole of the first member, and the first connector body is fixed arranged an operating part between the connecting boss and the mounting part, the operating part is arranged at a distance from the connecting boss to form a connecting groove, and the operating part is used to be driven by an external tool to drive at least a part of the first connector body to rotate ; wherein, the outer side surface of the operating part has at least one operating plane or operating hole or operating bump or operating groove, or, the cross section of the operating part is adapted to the cross section of the sleeve. The invisibility can be improved after the finished furniture being connected according to the connecting assembly of the present invention.

## Description

### TECHNICAL FIELD

The invention relates to a first connector, used for 2-in-1 , 3-in-1 or 4-in-1 furniture hardware connectors; the invention also relates to a connecting assembly and a connecting system used to connect a first member and a second member, especially for connecting furniture panels.

### BACKGROUND

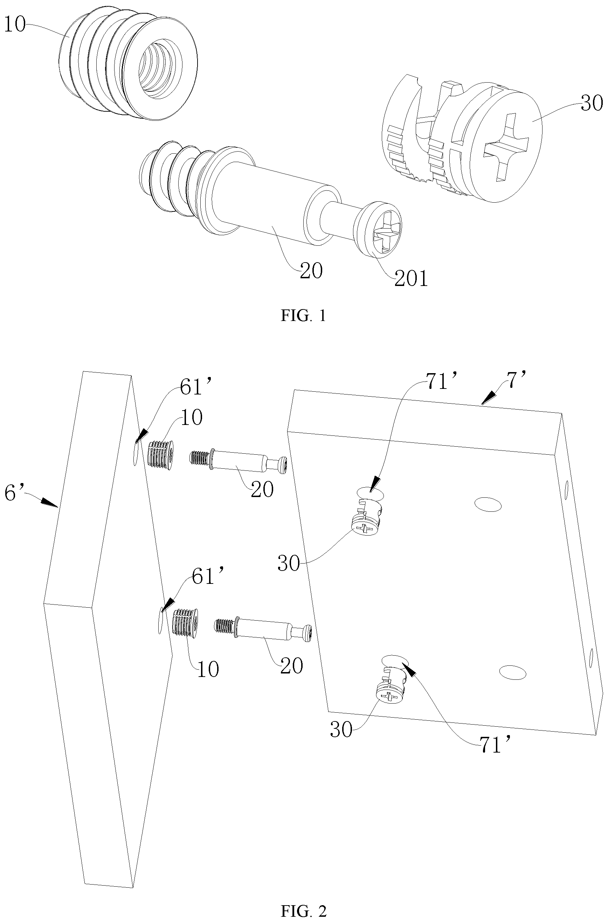

At present, with the continuous improvement of people's aesthetic concepts, tend to be invisible connectors are gradually used to realize connections between two furniture panels, thereby improving the aesthetics of furniture or equipment, wherein 2-in-1 or 3-in-1 or 4-in-1 connectors are widely used in the connection between two furniture panels. As shown in FIGS. 1-3, the existing 3-in-1 connector mainly include an embedded nut 10, a connecting bolt 20 and a cam 30. When we use it, the embedded nut 10 is embedded in a first mounting hole 61 of a first member 6', the cam 30 is installed in a second mounting hole 71' of a second member 7', the one side of the connecting bolt 20 is firmly connected with the first member 6' through the embedded nut 10, the embedded nut 10 plays a reinforcing role, and the other side of the connecting bolt 20 is inserted into the inside of the second member 7' and firmly connected with the cam 30, which to realize the first member 6' and the second member 7' to connect tendency invisible through the 3-in-1 connector, meanwhile, the 3-in-1 connector has strong detachability through multiple uninstalling and installing to realize the first member 6' and the second member 7' to uninstall and install.

Wherein, the connecting bolt 20 is generally made of metal material or metal with plastic material, and the second side of the connecting bolt 20 is provided with a round head 201 to connect the cam 30. In prior technology, in order to enable the first side of the connecting bolt 20 to rotate in the embedded nut 10 to achieve a firm connection, the round head 201 of the connecting bolt 20 is provided with a slot or a cross slot or a hexagonal slot, which to be rotated by screwdriver or hexagonal wrench to make the first side of the connecting bolt 20 into the embedded nut 10. Wherein, as the existing general usage habits, in order to achieve a better effect, the diameter and height of the round head 201 of the connecting bolt 20 are designed to be relatively large, which to ensure the round head 201 of the connecting bolt 20 to be operated multiple times, However, it will make the diameter of the existing cam 30 exceed 12mm (usually 15mm), which result in a relatively large diameter of the second mounting hole 71' of the second member 7', that the user can easily see the cam 30 from the second mounting hole 71', which result in low invisibility of the exiting 3-in-1 connector and affect the aesthetics of the furniture. Similarly, the 2-in-1 or the 4-in-1 connector also has the phenomenon that the diameter of the round head 201 of the connecting bolt 20 is relatively large, which leads to the diameter on the second member 7 'relatively large, resulting in low invisibility of the2-in-lor 4-in-one connector, which affects the aesthetics of the furniture.

### SUMMARY

In order to solve the technical problem of low invisibility when using existing 2-in-1, 3-in-1, or 4-in-1 connectors for the furniture, the first aspect of the present invention provides a first connector, the first connector is used to cooperate with a second connector to realize the connection between a first member and a second member, or, the first connector is used to cooperate with a third connector and a threaded fasteners to realize the connection between the first member and the second member, the first connector includes a first connector body, one side of the first connector body is protruded to form a connecting boss, and the other side of the first connector body is provided with a mounting part, and the mounting part is to lock into a first mounting hole of the first member, the first connector body is fixed with an operating part between the connecting boss and the mounting part. The operating part is arranged at a distance from the connecting boss to form a connecting groove, and the operating part is driven by an external tool to drive at least a part of the first connector body to rotate;
wherein, the outer side surface of the operating part at least has one operating plane or operating hole or operating bump or operating groove, or, the cross section of the operating part is adapted to the cross section of the sleeve.

In some implementations, the cross section of the operating part is quadrilateral, hexagonal, oval, waist-circular, or petal-shaped.

In some implementations, the cross-sectional area of the operating part is larger than the cross-sectional area of the connecting boss.

In some implementations, the cross section of the connecting boss is circular, and the diameter of the connecting boss is 3-5.3 mm.

In some implementations, the connecting groove surrounds the outer side wall of the first connector body in a circumferential direction to form an annular groove.

In some implementations, the mounting part comprises a first rotating part fixed to the first connector body, and the outer side circumference of the first rotating part is provided with external threads, or, along the lateral viewing direction of the first rotating part, the distance between the two sides of the first rotating part along a first predetermined linear direction is larger than a second predetermined linear direction;
wherein, when the operating part is driven by an external tool to rotate, the first rotating part is rotated at a certain angle in the first mounting hole of the first member fastened with the inner side of the first mounting hole.

In some implementations, the connector body, the connecting boss, the operating part and the first rotating part are metal integrated parts.

In some implementations, the first connector body protrudes between the first rotating part and the operating part to form a first limiting boss.

In some implementations, the cross-sectional area of the operating part is larger than the cross-sectional area of the first rotating part.

In some implementations, the mounting part comprises a first expansion body and a second rotating part which fixed with the first connector body, the second rotating part is to rotate into the first expansion body, and the outer side surface of the first expansion body is provided with at least one first fastening boss;
the outer surface of the second rotating part is provided with external threads; or, along the lateral viewing direction of the second rotating part, the distance between the two ends of the second rotating part along a third predetermined linear direction is larger than a fourth predetermined linear direction;
wherein, when the operating part is driven by an external tool to rotate, the second rotating part rotates at a certain angle in the first expansion body, making at least one of the first fastening bosses to move along the radially outward expansion of the first expansion body, making at least one of the first fastening bosses fasten with the surface side of the first mounting hole on the first member.

In some implementations, the first fastening boss is arranged at one side of the first expansion body, and the other side of the first expansion body is covered with a safety sleeve.

In some implementations, the outer side of the first expansion body is provided with a second limiting boss which close to the first fastening boss.

In some implementations, when the outer side of the second rotating part is provided with external threads, the first expansion body is provided with internal threads for fitting and connecting with the second rotating part;
wherein, along the direction of which the second rotating part is inserted into the first expansion body, the bottom diameter of the mounting internal thread decreases gradually.

In some implementations, the first expansion body is provided with a deformation gap which connected to the inside of the first expansion body at the position of the first fastening boss.

In some implementations, the first connector body has a hinged part between the connecting boss and the mounting part, and the connecting boss and the mounting part swivel through the hinged part.

Based on the first technical solution mentioned above, a first connector of the present invention has the beneficial effect which compared to the prior technology:
the first connector body is provided with an operating part between the connecting boss and the mounting part. When the external tool drives the operating part to rotate, it drives at least a part of the first connector body to rotate, that is, at least a part of the mounting part synchronizes with the operating part rotating and locking at least a part of the mounting part with the first mounting hole of the first member, so that the first connector and the first member are connected to each other, the operation is simple and convenient, and the assembly efficiency is improved.

The first connector of the present invention is provided with an operating part between the connecting boss and the mounting part, so that the diameter of the connecting boss can be made smaller, thereby reducing the diameter of the second connector (the cam in the prior technology) which make the diameter of the second mounting hole of the second member smaller and it is difficult for the user to observe the second connector through the second mounting hole, which improves the invisibility of the second connector in the second member, and further improves the aesthetics of furniture. In addition, in the present invention the operating part is provided on the first connector compared with the slots, cross grooves, or hexagonal grooves in the connecting boss in the prior technology, the force area of the external tool on the operating part is larger or the force is more stable, which is conducive to improving the stability of disassembly and assembly of the first connector on the first member, prolonging the service life, and improving the economic effect.

In addition, the second aspect of the present invention provides a first connector, the first connector is used to cooperate with a second connector to realize the connection between the first member and the second member, or, the first connector is used to cooperate with a third connector and threaded fasteners to realize the connection between the first member and the second member, the first connector comprises a first connector body, one side of the first connector body is protruded to form a connecting boss, and the other side of the first connector body is provided with a mounting part, and the mounting part is to be lock into the first mounting hole of the first member, the first connector body is provided with a driving external thread part between the connecting boss and the mounting part, and the driving external thread part is matched connecting with an operating part with an internal thread, the operating part is arranged at a distance from the connecting boss to form a connecting groove, and the operating part is driven by an external tool to drive at least a part of the first connector body to move; wherein, the outer side surface of the operating part at least has one operating plane or operating hole or operating bump or operating groove, or, the cross section of the operating part is adapted to the cross section of the sleeve.

In some implementations, the cross section of the connecting boss is circular, and the diameter of the connecting boss is 3-5.3 mm.

In some implementations, the mounting part comprises a second expansion body and a tapered part fixed to the first connector body, and the second expansion body inside is formed a tapered passage, the tapered part is movable in the tapered passage, and the outer surface of the second expansion body is provided with at least one second fastening boss;
wherein, when the operating part is driven by an external tool to rotate, the tapered part moves a certain distance in the tapered passage, which let at least one of the second fastening bosses to move along the radially outward expansion of the second expansion body , which makes at least one of the second fastening bosses fasten with the surface side of the first mounting hole on the first member.

In some implementations, the second expansion body inside have a limiting cavity, and the first connector body is provided with a limiting fence between the tapered part and the driving external thread part, and the limiting fence is slidely arranged in the inside of the limiting cavity;
wherein, when the operating part is driven by an external tool to rotate, the tapered part moves a certain distance in the tapered passage, the limiting fence against one side of the limiting cavity to limit the further sliding of the tapered part.

In some implementations, the outer side of the second expansion body is provided with a third limiting boss which close to the second fastening boss.

In some implementations, the cross-sectional area of the internal thread of the operating part is larger than the cross-sectional area of the connecting boss.

In some implementations, the first connector body has a hinged part between the connecting boss and the mounting part, and the connecting boss and the mounting part swivel through the hinged parts.

Based on the second technical solution mentioned above, a first connector of the present invention has the beneficial effect which compared to the prior technology:
the first connector body is fixed with a driving external thread part between the connecting boss and the mounting part, and the driving external thread part is matched with an operating part with an internal thread, when the external tool drives the operating part to rotate, the rotating operating part drives the driving external thread part to slide in a straight line, thereby driving at least a part of the first connector body to slide in a straight line, that is, after at least a part of the mounting part slides in a straight line, it locks at least a part of the mounting part with the first mounting hole of the first member, thereby connecting the first connector with the first member, the operation is simple and convenient, which is good to improving assembly efficiency.

The first connector of the present invention drives at least a part of the first connector body to rotate by providing a driving external thread part and an operating part between the connecting boss and the mounting part, so that the diameter of the connecting boss can be made smaller, furthermore the diameter of the second connector (the cam in the prior technology) is reduced, which make the diameter of the second mounting hole of the second member smaller, and it is difficult for the user to observe the second connector through the second mounting hole, which are improving the invisibility of the second connector on the second member, further improves the aesthetics of the finished furniture. In addition, the present invention is arranged with a driving external thread part and an operating part on the first connector, compared with the prior technology where a slot, a cross groove, or a hexagonal groove is provided on the connecting boss, the external tools' force area on the operating part is more large or more stable, which is good to improving the disassembly and assembly stability of the first connector on the first member, prolonging its service life, and improving economic efficiency.

In addition, the third aspect of the present invention provides a connecting assembly, including a second connector for installation on the second member and the first connector as described above in the first aspect or the second aspect of the present invention;
the second connector can rotate in the directions of rotation between the release position and the locking position; a slot is opened on the side wall of the second connector, and at least one inner side wall of the slot is provided with a clamping arm; when the second connector is in the release position, the connecting boss and the connecting groove are inserted into the slot from the opening of the slot; when the second connector is in the locked position, the clamping arm restricts the connecting boss being pulled out from the slot.

In some implementations, the second connector is provided with a driving part for driving the second connector to rotate.

In some implementations, the cross-section of the driving part is adapted to the cross-section of the sleeve.

In some implementations, when the cross-section of the operating part is adapted to the cross-section of the sleeve, the shape and area of the cross-section of the driving part are respectively the same as the shape and area of the cross-section of the operating part.

In some implementations, the second connector is a cam structure, and the diameter of the second connector is 6-11.5mm.

In addition, the fourth aspect of the present invention provides a connecting assembly, including a third connector for inserting on the second member, a threaded fastener, and the first connector as described above in the first aspect or the second aspect of the present invention.

A connecting passage is opened on the outer surface of the third connector, and a connecting hole that connecting to the connecting passage is opened on the top of the third connector, at least a part of the connecting groove is inserted into the connecting passage, where connecting to the connecting hole, the threaded fastener is threaded into the connecting hole, and one side of the threaded fastener is inserted into the connecting groove.

In some implementations, the third connector has a cylindrical structure, the two sides of the connecting passage respectively pass through the opposite sides of the third connector, and the connecting hole is located on one side of the third connector; the diameter of the third connector is less than 10mm.

In addition, the fifth aspect of the present invention provides a connecting system, including a first member, a second member, and the connecting assembly as above described in the third aspect of the present invention;
the first member is provided with a first mounting hole, and the mounting part is inserted into the first mounting hole; when the operating part rotates at a certain angle, the mounting part is fasten in the inner side wall of the first mounting hole;
the bottom of the second member is provided with a second mounting hole, the side surface of the second member is provided with a mounting passage which connect to an installation passage of the second mounting hole, and the second connector is positioned on the second mounting hole; when the second connector is in the release position, the connecting boss and the connecting groove are inserted into the slot of the second connector through the mounting passage, and the operating part is located in the mounting passage; when the second connector is in the locked position, the clamping arm restricts the connecting boss being pulled out from the slot.

In some implementations, the mounting passage comprises a first-level sub-passage and a second-level sub-passage connecting to each other, and the cross-sectional area of the first-level sub-passage is adapted as the cross-sectional area of the connecting boss, and the cross-sectional area of the second-level sub-passage is adapted to the cross-sectional area of the operating part.

In some implementations, it also included a decorative cover, and the decorative cover is inserted into the second mounting hole to cover the second mounting hole.

In addition, the sixth aspect of the present invention provides a connecting system, including a first member, a second member, and the connecting assembly as above described in the fourth aspect of the present invention;
the first member is provided with a first mounting hole, and the mounting part is inserted into the first mounting hole; when the operating part rotates at a certain angle, the mounting part is fasten in the inner side wall of the first mounting hole.

The bottom of the second member is provided with a second mounting hole, the side surface of the second member is provided with a mounting passage which connect to a mounting passage of the second mounting hole, and the second connector is positioned on the second mounting hole; when the second connector is in the released position, the connecting boss and the connecting groove are inserted into the slot of the second connector through the mounting passage, and the operating part is located in the mounting passage; when the second connector is in the locked position, the clamping arm restricts the connecting boss being pulled out from the slot.

In some implementations, the mounting passage comprises a first-level sub-passage and a second-level sub-passage connecting to each other, and the cross-sectional area of the first-level sub-passage is adapted as the cross-sectional area of the connecting boss, and the cross-sectional area of the second-level sub-passage is adapted to the cross-sectional area of the operating part.

In some implementations, it also included a decorative cover, and the decorative cover is inserted into the second mounting hole to cover the second mounting hole.

### BRIEF DESCRIPTION OF THE DRAWINGS

FIG. 1 is a structural schematic diagram of a three-in-one connector in the prior technology;
FIG. 2 is a schematic diagram of the disassembly of the first member, the second member and the three-in-one connector in the prior technology;
FIG. 3 is a schematic diagram of the first structure of the first connector according to Embodiment 1 of the present invention;
FIG. 4 is a second structural schematic diagram of the first connector in Embodiment 1 of the present invention;
FIG. 5 is a schematic diagram of a third structure of the first connector in Embodiment 1 of the present invention;
FIG. 6 is a schematic diagram of a fourth structure of the first connector in Embodiment 1 of the present invention;
FIG. 7 is a schematic diagram of a fifth structure of the first connector in Embodiment 1 of the present invention;
FIG. 8 is a schematic diagram of a sixth structure of the first connector in Embodiment 1 of the present invention;
FIG. 9 is a schematic diagram of the seventh structure of the first connector in Embodiment 1 of the present invention;
FIG. 10 is a schematic diagram of the eighth structure of the first connector in Embodiment 1 of the present invention;
FIG. 11 is a schematic structural diagram of FIG. 10 at another viewing angle;
FIG. 12 is a schematic diagram of a ninth structure of the first connector in Embodiment 1 of the present invention;
FIG. 13 is a schematic diagram of the tenth structure of the first connector in Embodiment 1 of the present invention;
FIG. 14 is a structural schematic diagram at another viewing angle after omitting to show the first expansion body in FIG. 13;
FIG. 15 is a schematic diagram of the eleventh structure of the first connector in Embodiment 1 of the present invention;
FIG. 16 is a disassembled schematic diagram of FIG. 15;
FIG. 17 is a schematic diagram of a twelfth structure of the first connector in Embodiment 1 of the present invention;
FIG. 18 is a schematic diagram of the thirteenth structure of the first connector in Embodiment 1 of the present invention;
FIG. 19 is a schematic connection diagram of a connecting assembly composed of a first connecting part and a second connecting part according to Embodiment 1 of the present invention, in which the second connecting part is in a released position;
FIG. 20 is a schematic connection diagram of a connecting assembly composed of a first connector and a second connector according to Embodiment 1 of the present invention, in which the second connector is in a locked position;
FIG. 21 is a schematic diagram of the connecting system of Embodiment 1 of the present invention in a disassembled state;
FIG. 22 is a cross-sectional view of the connecting system of Embodiment 1 of the present invention in a connected state;
FIG. 23 is a schematic structural view of the first connector in Embodiment 2 of the present invention;
FIG. 24 is a sectional view along A-A in FIG. 23;
FIG. 25 is a disassembled schematic diagram of FIG. 23;
FIG. 26 is another structural schematic diagram of the first connector in Embodiment 2 of the present invention;
FIG. 27 is another structural schematic diagram of the first connector in Embodiment 2 of the present invention;
FIG. 28 is a cross-sectional view of the connecting system of Embodiment 2 of the present invention in a connected state;
FIG. 29 is a schematic diagram of a connecting assembly composed of one of the first connecting piece, the third connecting piece, and a threaded fastener according to Embodiment 3 of the present invention;
FIG. 30 is a schematic structural view of a third connector and a threaded fastener according to Embodiment 3 of the present invention;
FIG. 31 is a schematic diagram of the connecting system of Embodiment 3 of the present invention in a disassembled state;
FIG. 32 is a cross-sectional view of the connecting system of Embodiment 3 of the present invention in a connected state;
FIG. 33 is another cross-sectional view of the connecting system of Embodiment 3 of the present invention in a connected state;
FIG. 34 is a sectional view of a second member of the present invention.

### DETAILED DESCRIPTION OF THE EMBODIMENTS

Accompanying drawings and embodiments, present invention will be further described to the specific implementation manners. The following embodiments are used to illustrate the present invention, but not to limit the scope of the present invention.

In the description of the present invention, what need to understand are the terms "center", "longitudinal", "transverse", "length", "width", "thickness", "upper", "lower", "front", " Orientation or position indicated by "back", "left", "right", "vertical", "horizontal", "top", "bottom", "inner", "outer", "clockwise", "counter clockwise" etc. relationship is based on the orientation or positional relationship shown in the drawings, and is only for the convenience of describing the present invention and simplifying the description, rather than indicating or implying that the referred device or element must have a specific orientation, be constructed and operated in a specific orientation, therefore It should not be construed as a limitation of the present invention.

In addition, the terms "first", "second" are only used to describe the purposes, and cannot be construed as indicating or implying relative importance or implicitly specifying the quantity of indicated technical features. Thus, a feature defined as "first" , "second" may explicitly or implicitly include one or more of these features. In the description of the present invention, "plurality" means two or more, unless otherwise specifically defined.

In the present invention, unless otherwise clearly specified and limited, the terms such as "installation", "connection", "connection" and "fixation" should be understood in a broad sense, for example, it can be a fixed connection or a detachable connection, or integrated; it can be mechanically connected or electrically connected; it can be directly connected or indirectly connected through an intermediary, and it can be the internal communication of two components or the interaction relationship between two components. Those of ordinary skill in the art can understand the specific meanings of the above terms in the present invention according to specific situations.

In the present invention, unless otherwise clearly specified and limited, a first feature being "on" or "under" a second feature include direct contact between the first and second features, and also include the first and second features not in direct contact but through another characteristic contact between them. Moreover, "above", "on" and "up" the first feature on the second feature include that the first feature is directly above and obliquely above the second feature, or simply means that the first feature is horizontally higher than the second feature. "Below", "beneath" and "under" the first feature to the second feature include that the first feature is directly below and obliquely below the second feature, or simply means that the first feature has a lower level than the second feature.

In the prior technology, as shown in FIGS. 1-2, the three-in-one connector is composed of an embedded nut 10, a connecting bolt 20 and a cam 30, and is mainly used to realize the invisible connection between two furniture panels. Wherein, it is set up that one of the furniture panels is the first member 6', and the other furniture panel is the second member 7', and the shape or material of the first member 6' and the second member 7' can be the same or different, the shape can be a plate, a block, or a column, and the material can be wood, plastic, metal, or polymer synthetic materials, etc. or their assemblies, which is not limited here.

When using a three-in-one connector, the first member 6' is provided with a first mounting hole 61', and the second member 7' is provided with a second mounting hole 71', and the embedded nut 10 is embedded in the first mounting hole 61'of first member 6', the cam 30 is installed in the second mounting hole 71' of the second member 7', and the first side of the connecting bolt 20 is firmly connected to the first member 6' through the embedded nut 10. the embedded nut 10 plays a reinforcing role, and the second side of the connecting bolt 20 is inserted into the second member 7' and firmly connected to the cam 30, so that the first member 6' and the second member 7' are invisible connected through a three-in-one connector. In addition, in the prior technology, there are also two-in-one connectors or four-in-one connectors, wherein the two-in-one connection is composed of a connecting bolt 20 and a cam 30, when use it, and the first side of the connecting bolt 20 is directly installed in the first mounting hole 61 of the member 6', the second side of the connecting bolt 20 is inserted into the second member 7' and firmly connected to the cam 30, compared with the three-in-one connector, the two-in-one connector is no use the embedded nut 10, resulting in relatively general firmness of connection. For the connection method of the four-in-one connector, please refer to the prior technology in this field, and the description is omitted here.

No matter 3-in-1 connector or a 2-in-1 connector, the second side of the existing connecting bolt 20 is provided with a round head 201 for connecting the cam 30, and a slot or a cross slot or the hexagonal slot (usually cross slot) is provided on the round head 201, which to be rotated by screwdriver or hexagonal wrench to make the first side of the connecting bolt 20 into the embedded nut 10 or in the first mounting hole 61 or the first member 6. because of the diameter of the connecting bolt 20 is relatively large, in order to ensure that the first side of the connecting bolt 20 rotates smoothly in the embedded nut 10 or inside the first mounting hole 61' of the first member 6', it is usually necessary to design a larger diameter of the round head 201 of the connecting bolt 20 in this field, to ensure that the cross groove of the round head 201 is large and deep enough to ensure the force of the screwdriver acting on the round head 201 to stably drive the connecting bolt 20 to rotate. In addition, the larger diameter of the round head 201 can ensure repeated operation of the screwdriver, which to realize multiple disassembly and assembly of the connecting bolt 20 on the first member 6'.

Base on the above diameter of the round head 201 is relatively large, it will make the diameter of the existing cam 30 exceed 12mm, which result in a larger diameter of the second mounting hole 7 1' of the second member 7', the second mounting hole 71' with a larger diameter destroys the aesthetics of the second member 7', and when the first member 6' and the second member 7' are connected, the user can easily see the cam 30 from the second mounting hole 71 ', which result in low invisibility of the three-in-one connector and affect the aesthetics of the furniture.

In addition, it also has the technical problem that the diameter of the second mounting hole 71' is relatively large when use the 2-in-1 connector or the 4-in-1 connector to connect the first member 6 and second member 7, which leads to the diameter on the second member 7' large, it will destroy the aesthetics of the second member 7', which affects the aesthetics of the furniture.

### Embodiment 1

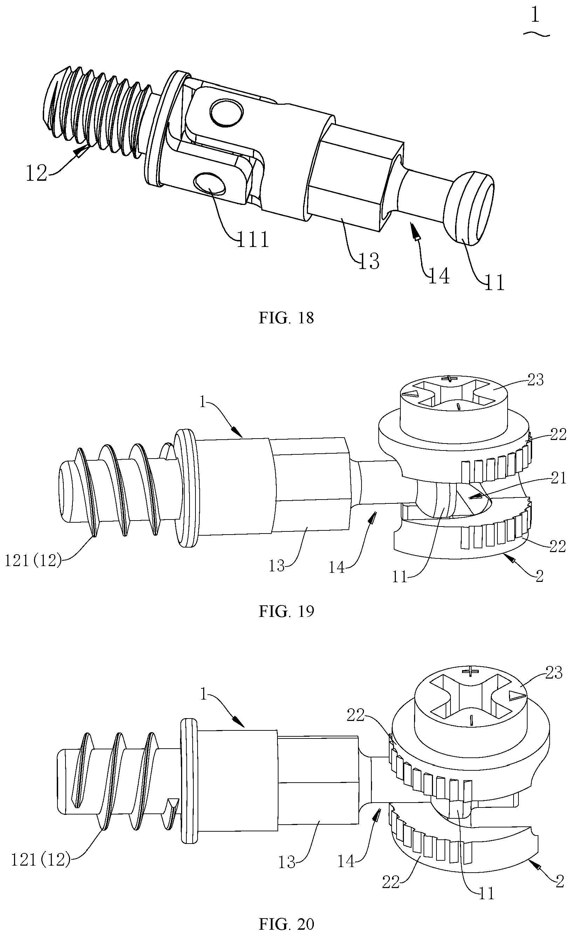

Because of the technical problem of low invisibility that two furniture panels are connected by the two-in-one connector or the three-in-one connector in the prior technology, Embodiment 1 of the present invention discloses a connecting assembly, as shown in FIGS. 19-22, the connecting assembly includes a first connector 1 and a second connector 2. when using first connector 1 firmly connected to the first member 6, and the second connector 2 is installed on second mounting hole 71 of the second member 7, according to one side of the first connector 1 is inserted into the second member 7 and firmly connected to the second connector 2, which make the first member 6 and the second member 7 connecting pass through the first the connector 1 and second connector 2 to realize invisible connect. Wherein, the structure of the second connector 2 in Embodiment 1 of the present invention is similar to the structure of the cam 30 in the prior technology, but the difference is: the diameter of the second connector 2 is much smaller than that of the cam 30 in the prior technology which makes the diameter of the second mounting hole 71 smaller, improving the aesthetics of the second member 7, at the same time, it is difficult for users to observe the second connector 2 through the second mounting hole 71 with a smaller diameter, which further improves the appearance of the furniture aesthetics.

Below will have the further specific described about the structure of the first connector 1 in the embodiment 1.

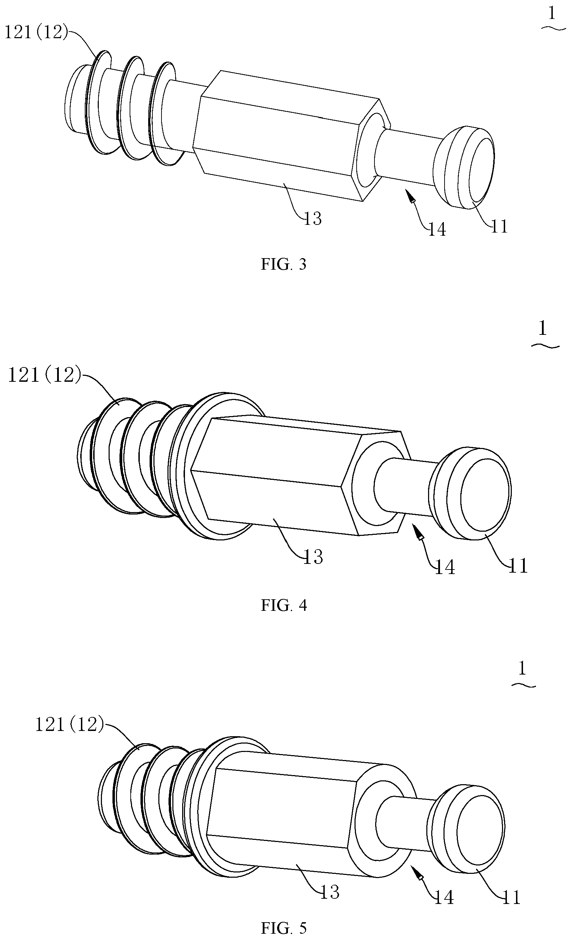

As shown in FIGS. 3-18, the first connector 1 of Embodiment 1 of the present invention includes a first connector body, one side of the first connector body is protruded to form a connecting boss 11, and the other side of the first connector body is provided with a mounting part 12, and the mounting part 12 is used to be locked into the first mounting hole 61 of the first member 6, and the first connector body is fixed an operating part between the connecting boss 11 and the mounting part 12. the operating part 13 is arranged at a distance from the connecting boss 11 to form a connecting groove 14, and the operating part 13 is used to be driven by an external tool to drive at least a part of the first connector body to rotate; wherein, the outer side wall of the operating part 13 at least has one operating plane or operating hole or operating bump or operating groove, or the cross section of the operating part 13 is adapted to the cross section of the sleeve.

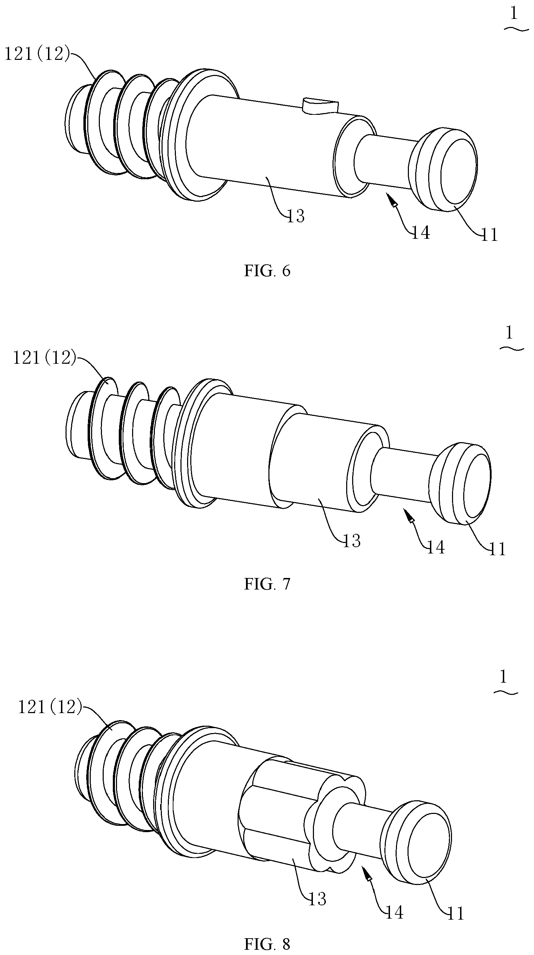

It can be understood that the operating part 13 is non-rotatable relative to the first connector body, when the external tool drives the operating part 13 to rotate, the operating part 13 drives at least a part of the main first connector body to rotate. Wherein, the operating part 13 can be integrally formed on the first connector body, for example, the operating part 13 and the first connector body are a metal integral part or a plastic integral part; or, operating part 13 is wrapped or covered or bonded to middle of the connecting boss 11 and the mounting part 12 of the first connector body by interference fit, which make the operating part 13 is fixed on the first connector body, for example, the operating part 13 is a plastic part, and the first connector body is a metal part. The cross section of the operating part 13 needs to be designed as a non-circular shape or a non-cylindrical structure. For example as shown in FIGS. 3-5 there is at least one operating plane on the side surface of the operating part 13, and the number of operating planes can be one or two or four or six, etc., using external tools such as pliers or other pliers or wrenches to clamp the operating part 13 to drive it to rotate. Another example is an operating hole on the side surface of the operating part 13, using an external tool such as a screwdriver, a metal bolt or an Allen wrench is inserted into the operating hole to drive the operating part 13 to rotate. As another example, as shown in FIG. 6, the side surface of the operating part 13 has an operating bump or an operating groove, using an external tool such as a pliers or a wrench to clamp the operating bump or the operating groove to drive the operating part 13 to rotate. Another example is shown in FIGS. 3, 4, FIGS. 7-20, the cross-section of the operating part 13 is adapted to the cross-section of the sleeve, and the external tool that drives the operating part 13 to rotate at this moment is a socket wrench, wherein the sleeve wrench is a common tool in this field, such as the manual socket wrench of the national standard GB T 3390.1-2004, or other national standard manual sleeve wrench or electric wrench, the cross section of the sleeve is non-circular, including but not limited to triangular or square or polygonal shapes such as hexagonal or octagonal, or elliptical or waist-shaped or petal-shaped, etc., when the sleeve wrench driving the operating part 13 to rotate synchronously with the sleeve, thereby at least a part of the mounting part 12 of the first connector 1 is rotated and firmly connected with the first member 6.

Based on the above scheme, an operating part 13 is provided on the first connector body. The operator uses an external tool to drive the operating part 13 to drive the mounting part 12 to connect with the first member 6, during the operation, the force area is large and stable, effectively improving the installation efficiency and disassemble stability of the first connector 1 on the first member 6. At the same time, the operating part 13 provided on the first connector body which can reduce the diameter of the second connector 2, thereby making the diameter of the second mounting hole 71 of the second member 7 smaller, and improving the aesthetics of the second member 7, at the same time, it is difficult for the user to observe the second connector 2 through the second mounting hole 71 with a smaller hole, which improves the invisibility of the second connector 2 on the second member 7, thereby improving the aesthetics of the furniture.

Furthermore, the connecting boss 11 of the first connector body is detachable connected with the second connector 2 of the embodiment 1, and the cross section of the connecting boss 11 is circular or oval or square or hexagonal or irregular shape, etc., embodiment 1 of the invention does not limit the specific shape of the connecting boss 11. Usually, the cross section of the connecting boss 11 is preferably circular, and the connecting groove 14 surrounds the outer surface of the first connector body to form an annular groove shape, after the operator has fixedly connected the first connector 1 to the first member 6, no need to distinguish the mounting direction of the first connector 1 in order to make the connecting boss 11 insert into the second connector 2 smoothly, which improves the convenience of assembly.

Furthermore, in some implementations of embodiment 1, when the cross section of the connecting boss 11 is circular, the diameter of the connecting boss 11 is 3-5.3 mm, such as 3mm, 3.5mm, 4.0mm, 4.2mm, 4.5mm, 5mm, 5.3mm, etc., such a design can ensure that the diameter of the second connector 2 is less than 12mm, so that the diameter of the second connector 2 in embodiment 1 of the invention is much smaller than the diameter of the cam 30 in the prior technology, improving the invisibility of the second connector 2 on the second member 7, thereby improving the aesthetics of the furniture.

Furthermore, wherein, when the diameter of the connecting boss 11 of the first connector in the embodiment 1 is in the range of 4.2mm-5.3mm, technician in this filed can process a slot or a cross slot or a hexagonal slot on the one side surface of the connecting boss 11, after a screwdriver or wrench is used to insert the slot or cross slot or hexagonal slot to drive the first connector body to rotate, the slot or cross slot or hexagonal slot will be destroyed, it is difficult to use again; or, when the diameter of the connecting boss 11 of the first connector of the embodiment 1 is in the range of 4.2mm-5.3mm, the first connector 1 is difficult to directly install into the first member 6 with a slot or cross slot or hexagonal slot screwdriver of manual or electric, so driving the first connector body to rotate again still needs to drive the operating part 13 to rotate, the operating part 13 is required when the first connector 1 install to the first member 6, one side surface of the connecting boss 11 is provided with a slot, a cross slot or a hexagonal slot, which is still within the protection range of the invention, when the diameter of the connecting boss 11 of the first connector of the present embodiment 1 is in the range of 3mm-4.2mm, it is difficult to process a slot or a cross slot or a hexagonal slot on one side surface of the connecting boss 11, at this time the first connector body is driven to rotate, it is completely dependent on the operating part 13, at this time the diameter of the second connector 2 that cooperates with the first connector 1 is even smaller, the diameter of the second mounting hole 71 of the second member 7 is reduced to improve the invisibility.

Correspondingly, the diameter of the connecting groove 14 with annular groove shaped of the first connector body is smaller than the diameter of the connecting boss 11, that is the diameter of the connecting groove 14 of the first connector body in embodiment 1 of the invention range is 1.8-4mm, such as 1.8mm, 2.0mm, 2.5mm, 3.0mm, 3.5mm, 4mm etc..

Further, in some implementations of the embodiment 1, in order to make the external tool more stably drive the operating part 13 to rotate to drive the first connector body to rotate, the cross-sectional area of the operating part 13 is larger than the cross-sectional area of the connecting boss 11, that is, the diameter of the circumscribed circle formed by the outer contour of the operating part 13 is larger than the diameter of the connecting boss 11. In this way, there is a larger contact area between the operating part 13 and the external tool, thereby improving the assembly stability of the first connector 1 on the first member 6. In addition, when the external tool is a sleeve wrench, the cross-sectional area of the operating part 13 is larger than the cross-sectional area of the connecting boss 11 to ensure that the sleeve is sleeved on the operating part 13 after passing through the connecting boss 11, ensuring that the sleeve wrench smoothly drives the operating part 13 to rotate.

Furthermore, the connection between the mounting part 12 and the first member 6 in embodiment 1 of the invention includes the following two types: the first one is that the mounting part 12 includes a first rotating part 121, and the first rotating part 121 is directly connected to place in the first mounting hole 61 of the first member 6, the first rotating part 121 will be locked with the inner surface of the first mounting hole 61 after synchronous rotation with the operating part 13; The second is that the mounting part 12 includes a first expansion body 122 and a second rotating part 123, the second rotating part 123 is arranged inside the first expansion body 122 and rotates relative to the first expansion body 122, when in use, the first expansion body 122 is set in the first mounting hole 61 of the first member 6, the second rotating part 123 rotates synchronously with the operating part 13 to expand the outer peripheral surface of the first expansion body 122, so that the first fastening boss 122a on the first expansion body 122 and the inner surface of the first mounting hole 61 are locked tightly to each other.

The two connection modes between the above-mentioned mounting part 12 and the first member 6 will be described in detail below respectively.

As the first connection manner between the mounting part 12 and the first member 6, as shown in FIGS. 3-11, the mounting part 12 includes a first rotating part 121 fixedly connected with the first connector body, when the operating part 13 is driven by an external tool to rotate, the first rotating part 121 is fastened with the inner surface of the first mounting hole 61 after rotating at a certain angle in the first mounting hole 61 of the first member 6. Wherein, the locking manner between the first rotating part 121 and the inner surface of the first mounting hole 61 includes the following two types, the first one is shown in FIGS. 3-9, the first rotating part 121 is cylindrical or conical shape, and the outer surface of the first rotating part 121 is provided with an external thread, the outer diameter of the external thread of the first rotating part 121 is larger than the diameter of the first mounting hole 61, so that the first rotating part 121 is rotated along the first rotating direction by a certain angle (usually clockwise) in the first mounting hole 61, the first rotating part 121 is screwed into the first mounting hole 61 in a selftapping manner so that the external thread of the first rotating part 121 and the inner surface of the first mounting hole 61 fasten each other, so that the first connector 1 is firmly connected to the first member 6.

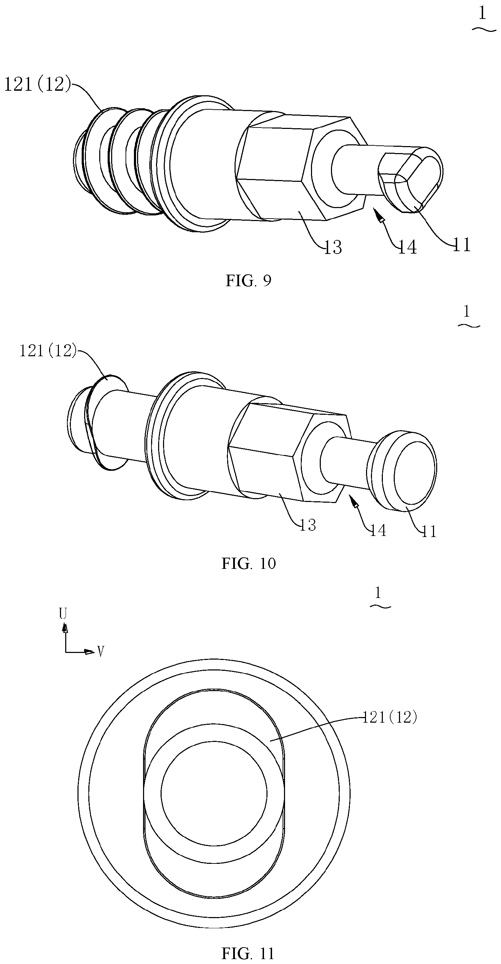

The second one of fasten manner between the first rotating part 121 and the inner surface of the first mounting hole 61, as shown in FIGS. 10-11, along the linear direction of the first rotating part 121, the distance between the two ends of the first rotating part 121 along the first predetermined linear direction U is larger than the distance between the two sides along the second predetermined linear direction V Wherein the first predetermined linear direction U and the second predetermined linear direction V have a certain angle, such as 30°, 60° or 90°, etc., which is not limited here. In this way, the cross section of the first rotating part 121 is, for example, oval or waist-shaped or rectangular or diamond-shaped, and the shape and size of the first mounting hole 61 of the first member 6 are consistent with the shape and size of the first rotating part 121, that is the cross-section of the first mounting hole 61 is oval, waist-circular, rectangular or diamond-shaped, etc., so that the first rotating part 121 can be smoothly inserted into the first mounting hole 61 through a clearance fit. When the external tool drives the operating part 13 to rotate a certain angle in the second rotation direction (usually clockwise), the first rotating part 121 also rotates the same angle in the first mounting hole 61, so that the two sides with the larger length dimension of the cross-section of the first rotating part 121 are respectively moved to the smaller two sides of the cross-section length dimension of the first mounting hole 61, at this time, the first rotating part 121 and the first mounting hole 61 are in an interference fit, a clamping force is generated between the first rotating part 121 and the inner surface of the first mounting hole 61 to restrict the first rotating part 121 being pulled out from the first mounting hole 61. When it is necessary to detach the first connector 1 from the first member 6, the external tool can drive the operating part 13 to rotate in a direction (usually counterclockwise) opposite to the second rotation direction.

Furthermore, in order to ensure that the first rotating part 121 rotates synchronously with the operating part 13, and the first connector 1 as a whole has greater structural strength, the first connector body, the connecting boss 11, the operating part 13 and the first rotating part 121 is a metal integral piece, for example, it is made of iron, galvanized alloy or stainless steel.

In some other implementations of embodiment 1, the cross-sectional area of the operating part 13 is larger than the cross-sectional area of the first rotating part 121, at the same time, the cross-sectional area of the operating part 13 is larger than the cross-sectional area of the first mounting hole 61, when the first rotating part 121 can be fully inserted into the first mounting hole 61 and is fastened with the inner surface of the first mounting hole 61, the one side of the operating part 13 is in contact with the surface of the first member 6, used the operating part 13 for the purpose of mounting and positioning, improving assembly accuracy and convenience.

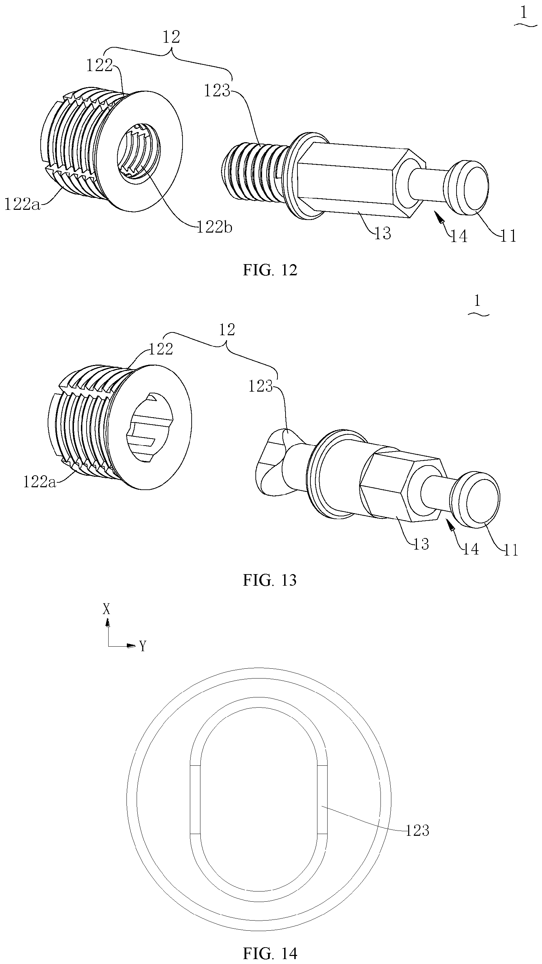

As the second connection manner between the mounting part 12 and the first member 6, as shown in FIGS. 12-16, the mounting part 12 includes the first expansion body 122 and the second rotating part 123 which firmly connected with the first connector body, and the first expansion body 122 is such as a cylindrical structure with a hollow interior, the first expansion body 122 is placed in the first mounting hole 61 of the first member 6 through clearance fit, the second rotating part 123 is rotatable arranged inside the first expansion body 122, the outer surface of the first expansion body 122 is provided with at least one first fastening boss 122a, the second rotating part 123 and the first connector body is integrally structure, so that the second rotating part 123 also rotates synchronously with the operating part 13. When the operating part 13 is driven by an external tool to rotate, the second rotating part 123 rotates at a certain angle inside the first expansion body 122, so that at least one first fastening boss 122a moves along the radial direction of the first expansion body 122 expand outward, so that the at least one first fastening boss 122a is fastened with the inner surface of the first mounting hole 61 of the first member 6 each other.

The number of the first fastening boss 122a in embodiment 1 of the invention may be one or more, the first fastening boss 122a and the first expansion body 122 are integrally structure. The first fastening boss 122a and the first expansion body 122 may have certain elasticity, such as plastic material. In addition, other structures of the first expansion body 122 in this embodiment 1 are the same structures of the embedded nut 10 in the prior technology, and details are omitted here.

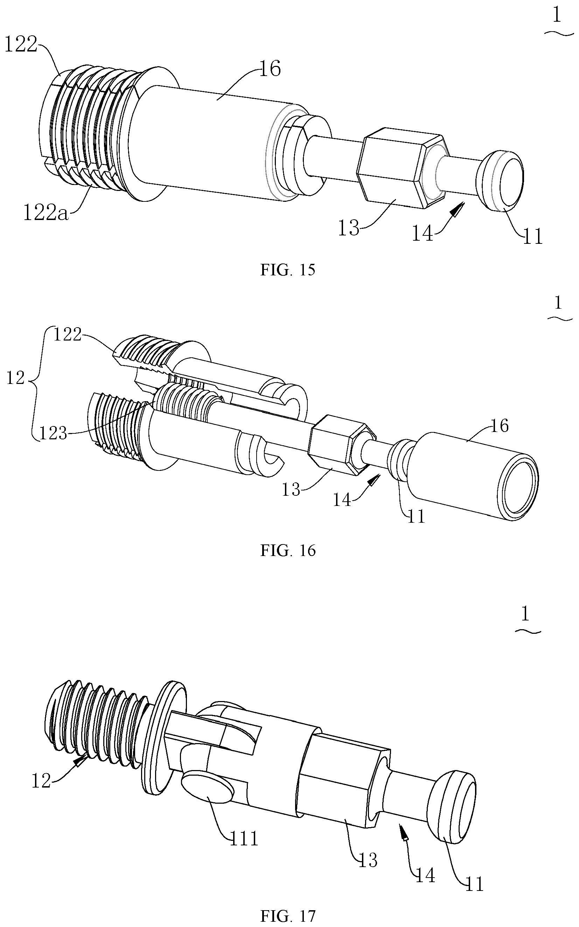

Furthermore, in some implementations of embodiment 1, as shown in FIG. 15 and FIG. 16, the first expansion body 122 is formed a plurality of sub-components, in order to prevent the dispersion phenomenon of the first expansion body 122 during using, the first fastening boss 122a is placed on one side of the first expansion body 122, and the other side of the first expansion body 122 is sleeved with the safety sleeve 16. Wherein, the sleeve diameter of the safety sleeve 16 is larger than the diameter of the operating part 13, so that the safety sleeve 16 is used to surround a plurality of sub-components to ensure the connection stability of the assembled first expansion body 122.

Furthermore, the second rotating part 123 drives the first fastening boss 122a to expand radially outward along the first expansion body 122, including the following two types, the first one is shown in FIG. 12, FIG. 15, FIG. 16, the second rotating part 123 is cylindrical or conical, and the outer surface of the second rotating part 123 is provided with an external thread; the first expansion body 122 is provided with an mounting internal thread 122b that cooperates with the second rotating part 123; wherein, along the direction in which the second rotating part 123 is inserted into the first expansion body 122, the thread base diameter of the mounting internal thread 122b gradually decreases. When the second rotating part 123 rotates in the first expansion body 122, the first expansion body can be expanded outward.

The second one is that the second rotating part 123 drives the first fastening boss 122a to expand radially outward along the first expansion body 122, as shown in FIG. 13, FIG. 14, along the linear direction of the second rotating part 123, the distance between the two sides of the second rotating part 123 along the third predetermined linear direction X is larger than the distance between the two sides along the fourth predetermined linear direction Y Wherein the third predetermined linear direction X and the fourth predetermined linear direction Y have a certain angle, such as 30°, 60° or 90°, etc., which are not limited here. In this way, the cross-section of the second rotating part 123 is, for example, oval or waist-shaped or rectangular or diamond-shaped, the shape and size of the hollow part inside the first expansion body 122 match the shape and size of the second rotating part 123, that is the cross section of the hollow part inside the first expansion body 122 is elliptical, waist-circular, rectangular or diamond-shaped, etc., so that the second rotating part 123 can be smoothly inserted into the interior of the first expansion body 122 through a clearance fit. When the external tool drives the operating part 13 to rotate a certain angle in the fourth rotation direction (usually clockwise), the second rotating part 123 also rotates the same angle inside the first expansion body 122, so that the two sides with the larger dimension of the cross-section of the second rotating part 123 are respectively moved to the two sides with the smaller dimension of the cross-section of the hollow part inside the first expansion body 122, at this time, the second rotating part 123 is an interference fit inside the first expansion body 122, the second rotating part 123 will drive the side surface of the first expansion body 122 to expand radially outward, so that driving at least one first fastening boss 122a to expand and abut against the inner surface of the first mounting hole 61, to increase the sliding friction force of the first expansion body 122 in the first mounting hole 61, so that restricting the mounting part 12 is pulled out from the first mounting hole 61, so that realizing the firmly fasten between the first connector 1 and the first member 6. When it is necessary to detach the first connector 1 from the first member 6, the external tool drives the operating part 13 to rotate in a direction (usually anticlockwise) opposite to the fourth rotation direction.

Furthermore, the above-mentioned first connector body is an integrally rigid structure between the connecting boss 11 and the mounting part 12, so that the centerline of the connecting boss 11 and the centerline of the mounting part 12 are on the same straight line, the first connector 1 is generally adapted to the connection surfaces of the first member 6 and the second member 7 being vertical or horizontal respectively, and has a strong heavy bearing capacity.

In some implementations, when the first member 6 and the second member 7 are connected and attached to each other, as shown in FIG. 17, FIG. 18, FIG. 22, the first connector body has a hinged part 111 between the connecting boss 11 and the mounting part 12, the connecting boss 11 and the mounting part 12 rotate mutually through the hinged part 111, so that the connecting boss 11 and the mounting part 12 form a certain angle, such as 10°, 30°, 65°, 100°, 150°, or 180° etc., specifically adjust the angle between the connecting boss 11 and the mounting part 12 according to the bevel where the first member 6 and the second member 7 are connected to each other, so that the mounting part 12 is firmly connected to the connection surface of the first member 6, at the same time, the connecting boss 11 and the connecting groove 14 can be smoothly connected with the second connector 2 on the connection surface of the second member 7, and finally the connection surface of the first member 6 and the connection surface of the second member 7 are attached to each other to realize invisible connection.

Wherein, the operating part 13 of embodiment 1 of the invention is closer to the connecting boss 11 than the hinged part 111, so that the mounting part 12, the hinged part 111, the operating part 13, the connecting groove 14 and the connecting boss 11 are sequentially arranged on the first connector body.

Furthermore, the hinged part 111 in embodiment 1 of the invention can be a pivot or a hinged ball or a universal joint structure. Specifically, as shown in FIG. 17, the first connector body is a separate structure between the connecting boss 11 and the mounting part 12, that is the first connector body is divided into a first split body and a second split body, and the connecting boss 11 is located on the first split body, and the mounting part 12 is located on the second split body, when the hinged part 111 is a pivot, the first split body and the second split body are respectively provided with pivot holes, the pin shaft or cylinder structure as the pivot to pass through the pivot holes of the first split body and the second split body in turn, so that the first split body and the second split body can rotate relative to each other around the pivot shaft, so that the connecting boss 11 and the mounting part 12 can rotate relatively. As shown in FIG. 18, when the hinged part 111 is a universal j oint, the universal joint such as a cross shaft, the first split body and the second split body are respectively provided with shaft holes, and the shaft holes of the first split body are sleeved on the cross shaft, the rotating shaft hole of the second split body is sleeved on the second rotating shaft of the cross shaft, so that the first split body and the second split body can rotate relatively around the cross shaft, so that the connecting boss 11 and the mounting part 12 rotates relatively, and the angle adjustment is more flexible, which improving the convenience of assembly, so that the connecting assembly of the embodiment 1 of the invention is suitable for the invisible connection of two furniture panels whose connecting surface is a bevel, and improving the aesthetics of the finished furniture.

Furthermore, based on the structure of the first connector 1 in the embodiment 1 of the present invention, the specific structure of the second connector 2 which is mated with the first connector 1 in the embodiment 1 will be further described below.

As shown in FIG. 19, FIG. 20, the second connector 2 can be a cylinder, a cone or a spherical structure, and the bottom (or top) of the second member 7 is provided with a second mounting hole 71 for accommodating the second connector 2, the second connector 2 is installed into the second mounting hole 71 through a clearance fit and is rotated in the second mounting hole 71, so that the second connector 2 is directly connected to the second member 7, and the second connector 2 can be rotate in the direction of rotation between the released position and the locked position, the side surface of the second connector 2 is provided with a slot 21, and at least one inner surface of the slot 21 is provided with a clamping arm 22; when the second connector 2 is in the released position, the connecting boss 11 and the connecting groove 14 are inserted into the slot 21 from the opening of the slot 21; when the second connector 2 is in the locked position, the clamping arm 22 restricts the connecting boss 11 from being pulled out of the slot 21.

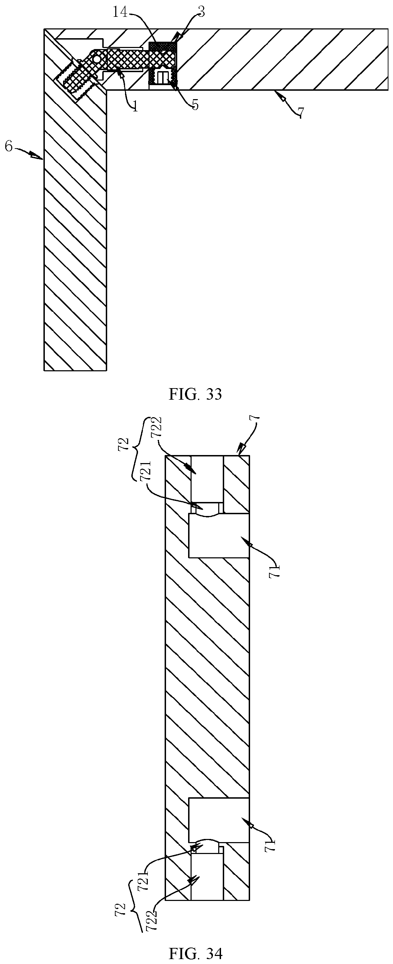

As shown in FIG. 34, for the purpose of tendency invisible connection between the first member 6 and the second member 7, the second connector 2 is completely placed in the second mounting hole 71, so the side surface of the second member 7 is provided with the mounting passage 72 communicated with the second mounting hole 71, so that the connecting boss 11 and the connecting groove 14 pass through the mounting passage 72 to be inserted into the slot 21 of the second connector 2, at this time, a part of the first connector body and the operating part 13 are also inserted into the mounting passage 72, so that the first connector 1 is partly concealed inside the second member 7, at this time, the surface of the first member 6 and the surface of the second member 7 are attached to each other to realize invisible connection, the user cannot observe the first connector 1 and the second connector 2 from outside the first member 6 or the second member 7.

Further, the clamping arm 22 in embodiment 1 of the invention is arranged along the opening edge of the slot 21, and the number of the clamping arm 22 can be one or two, generally, when the number of the clamping arm 22 is two, the two clamping arms 22 are respectively disposed on opposite inner sides of the slot 21, and the two clamping arms 22 are respectively disposed in the connecting groove 14, thereby restricting the connecting boss 11 from being pulled out from the slot 21.

In some implementations of the embodiment 1, the second connector 2 is made of metal, such as iron or steel or galvanized alloy, which has high structural strength and meets relatively large load-bearing requirements.

In order to drive the second connector 2 to rotate between the released position and the locked position, the side of the second connector 2 is provided with the driving part 23 for driving the second connector 2 to rotate, and the driving part 23 can be a groove or a convex point structure. In some implements, as shown in FIG. 19 and FIG. 20, the driving part 23 is a groove structure, such as a slot, a cross slot or an inside hexagonal slot, etc., and the driving part 23 of the groove structure can ensure that the second connector 2 are all placed in the second mounting hole 71 for the purpose of invisibility, then a tool is used to insert into the driving part 23 to drive the second connector 2 to rotate in the second mounting hole 71.

Furthermore, in the invention the second connector 2 in embodiment 1 is a cam structure, that is the groove 21 is a cam structure. When the second connector 2 is at the released position, the depth of the connecting boss 11 and the connecting groove 14 inserted into the slot 21 is relatively deep; When the second connector 2 is at the locked position, the depth of the connecting boss 11 is inserted into the slot 21 is relatively shallow, so that the clamping arm 22 is clamped in the connecting groove 14, at this time, the clamping arm 22 is pressed against the connecting boss 11 to restrict the connecting boss 11 from being pulled out from the slot 21. Based on the diameter of the connecting boss 11 of the first connector 1 of the first embodiment 1 is 3-5.3 mm, the diameter of the second connector 2 of the embodiment 1 of the invention is 6-11.5 mm, such as 6 mm, 7 mm, 8.5mm, 10mm, 11.5mm etc., so the diameter of the second connector 2 in embodiment 1 of the invention is much smaller than the diameter of the cam in the prior technology, so that the diameter of the second mounting hole 71 is smaller, and the invisibility of the second connector 2 on the second member 7 is improved.

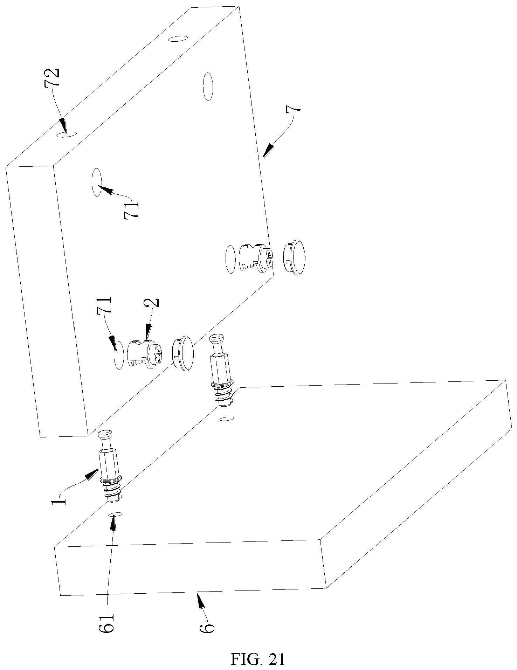

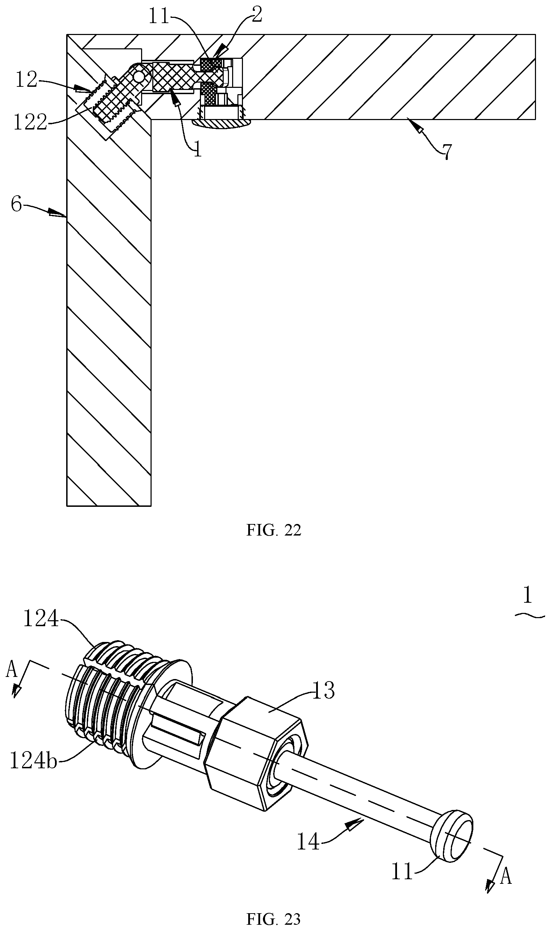

Based on the structure of the connecting assembly in embodiment 1 of the invention above, the invisible connection between the first member 6 and the second member 7 can be realized by the connecting assembly in embodiment 1 of the invention, to form a connecting system, as shown in FIG. 21 and FIG. 22, the connecting system includes a first member 6, a second member 7, a first connector 1 and a second connector 2; wherein the first member 6 is provided with a first mounting hole 61, and the mounting part 12 is inserted into the first mounting hole 61; when the operating part 13 rotates at a certain angle, the mounting part 12 is fastened with the inner surface of the first mounting hole 61; the bottom of the second member 7 is provided with a second mounting hole 71, and the side surface of the second member 7 is provided with a mounting passage 72 connecting to the second mounting hole 71, and the second connector 2 is rotatable placed in the second mounting hole 71; when the second connector 2 is in the released position, the connecting boss 11 and the connecting groove 14 is inserted into the slot 21 of the second connector 2 through the mounting passage 72, and the operating part 13 is located in the mounting passage 72; When the second connector 2 is in the locked position, the clamping arm 22 restricts the connecting boss 11 from being pulled out from the slot 21, so that the first member 6 and the second member 7 are invisible connected through the first connector 1 and the second connector 2.

Wherein, please refer to the above description for the specific mounting manner between the first connector 1 and the first member 6, the specific mounting manner between the second connector 2 and the second member 7 of the connecting system in embodiment 1 of the invention, and details are omitted here.

In some implementations of this embodiment 1, as shown in FIG. 34, the mounting passage 72 includes a first-level sub-passage 721 and a second-level sub-passage 722 that communicate with each other, the cross-sectional area of the first-level sub-passage 721 is matched to the cross-sectional area of the connecting boss 11, and the cross-sectional area of the second-level sub-passage 722 is matched to the cross-sectional area of the operating part 13. When the cross-sectional area of the operating part 13 is larger than the cross-sectional area of the connecting boss 11, the mounting passage 72 is a variable-diameter passage, and the part of the mounting passage 72 near the second mounting hole 71 (that is the cross-sectional area of the first-level sub-passage 721 ) is smaller than the part of the mounting passage 72 close to it's opening (that is the cross-sectional area of the second-level sub-passage 722 ), so that the first connector 1 can be more adapted to be inserted into the mounting passage 72, and the load capacity of the second member 7 is stronger, to improving the firmness of the connection between the first member 6 and the second member 7.

### Embodiment 2

For the technical issues of low invisibility after two furniture panels are connected by 2-in-1 connectors or 3-in-1 connectors in the prior technology, as shown in FIGS. 23-28, embodiment 2 of the invention discloses a first connector 1, which cooperates with a second connector 2 of the above-mentioned embodiment 1 to form a connecting assembly, the first member 6 and the second member 7 realize invisible connection through the connecting assembly of the embodiment 2 of the invention. Wherein, the structure of the first connector 1 of the embodiment 2 of the invention is different from that of the first connector 1 of the above-mentioned embodiment 1, the difference is that: the first connector 1 of the embodiment 2 includes the first connector body, at least a part of the first connector body is driven by external force to move, so that the mounting part 12 of the first connector body is firmly connected with the first member 6, so that the first connector 1 is installed on the first member 6.

Specifically, for the structure of the first connector 1 of the embodiment 2 will be described in detail below.

As shown in FIGS. 23-27, the first connector 1 of the embodiment 1 includes the first connector body, one side of the first connector body protrudes to form a connecting boss 11, and the other side of the first connector body is provided with a mounting part 12, the mounting part 12 is locked in the first mounting hole 61 of the first member 6, the first connector body is fixed with a driving external thread part 17 at a position between the connecting boss 11 and the mounting part 12, the driving external thread part 17 is matched with an operating part 13 with an internal thread, and the operating part 13 is arranged at a distance from the connecting boss 11 to form a connecting groove 14, the operating part 13 is used to be driven by an external tool to drive at least a part of the first connector body to move; wherein, the outer surface of the operating part 13 has at least one operating plane or operating hole or operating bump or operating groove, or, the cross section of the operating part 13 is adapted to the cross section of the sleeve.

It should be noted that the structure of the connecting boss 11 in this embodiment 2 is exactly same structure as the connecting boss 11 in the above-mentioned embodiment 1, therefore, the specific structure and working principle of the connecting boss 11 in the embodiment 2 can refer to the description of the embodiment 1 above-mentioned, and details are omitted here. For example, when the cross section of the connecting boss 11 is circular, the diameter of the connecting boss 11 is 3-5.3 mm, such as 3mm, 3.5mm, 4.0mm, 4.2mm, 4.5mm, 5mm, 5.3mm etc.

The specific structure of the operating part 13 of the embodiment 2 is similar to the structure of the operating part 13 of the above-mentioned embodiment 1, but the difference is that the operating part 13 of the embodiment 2 is relatively separated from the first connector body, so that the operating part 13 can be detached from the first connector body. The first connector body is fixed with a driving external thread part 17 between the connecting boss 11 and the mounting part 12, for example, the driving external thread part 17 is integrally formed on the first connecting part body, the operating part 13 is sleeved outside the driving external thread part 17 and the internal thread of the operating part 13 and the driving external thread part 17 cooperate with each other to realize threaded connection, when the external tool drives the operating part 13 to rotate, the principle of screw connection is used to convert the rotary motion of the operating part 13 into the linear motion of driving the external thread part 17, thereby driving at least a part of the first connector body to slide linearly.

Furthermore, the following is a detailed description of the firmly connection between the mounting part 12 and the first mounting hole 61 of the first member 6.

As shown in FIGS. 23-26, the mounting part 12 of the embodiment 2 includes a second expansion body 124 and a tapered part 125 fixedly connected with the first connector body, a tapered passage 124a is formed inside the second expansion body 124, the tapered part 125 is movable placed inside the tapered passage 124a, the outer surface of the second expansion body 124 is provided with at least one second fastening boss 124b; wherein, when the operating part 13 is driven by an external tool to rotate, the tapered part 125 move a certain distance in the tapered passage 124a, so that at least one second fastening boss 124b expands outward along the radial direction of the second expansion body 124, so that the at least one second fastening boss 124b and the inner surface of the first mounting hole 61 of the first member 6 are fastened each other. It can be understood that the cross-sectional area of one side of the tapered part 125 is larger than the cross-sectional area of the other side, such as in the shape of a conical frustum or a conical frustum, etc., it can also be a non-conical protruding shape, as long as the tapered part 125 move in the tapered passage 124a, at least one second fastening boss 124b can expand outward along the radial direction of the second expansion body 124, the shape of the tapered part 125 is not particularly limited here. The tapered part 125 is preferably in the frustum shape. For example, the tapered part 125 is integrally formed at one side of the first connector body, at this time the inside peripheral surface of the tapered passage 124a is also in the shape of a frustum shape.

Wherein, in order to make the tapered part 125 be smoothly placed in the tapered passage 124a in the second expansion body 124, the second expansion body 124 can be formed by combine with a plurality of sub-components, as shown in FIGS. 23-25, the second expansion body 124 is assembled by two sub-components with tapered grooves. The second fastening boss 124b and the second expansion body 124 are integrally structure. The second fastening boss 124b and the second expansion body 124 can have a certain degree of elasticity, such as an integral plastic part. Furthermore, in order to ensure that the second fastening boss 124b can expand smoothly outward along the radial direction of the second expansion body 124, a deformation space connected to the tapered passage 124a is opened on the second expansion body 124 at the position of the second fastening boss 124b, the deformation space is used to improve the deformation capability of the second expansion body 124.

When the first connector 1 of embodiment 2 of the invention is installed on the first member 6, the second expansion body 124 is placed in the first mounting hole 61 of the first member 6 through clearance fit, when the external tool driving operating part 13 rotates in the fifth direction (usually clockwise), a part of the first connector body move linearly through the threaded connection between the internal thread of the operating part 13 and the driving external thread part 17, driving the tapered part 125 move in the tapered passage 124a, make the larger side of the cross-sectional area of the tapered part 125 gradually move toward the smaller side of the cross-sectional area of the tapered passage 124a, so that the tapered part 125 and the inside peripheral surface of the tapered passage 124a gradually become an interference fit, so that the tapered part 125 is pressed against the inner surface of the tapered passage 124a, so that the outer peripheral surface of the second expansion body 124 gradually expands radially outward, Furthermore, at least one second fastening boss 124b also expands outward along the radial direction of the second expansion body 124 and fasten with the inner surface of the first mounting hole 61 of the first member 6, so that the mounting part 12 and the first mounting hole 61 of the first member 6 to achieve a firm connection. When the first connector 1 needs to be detached from the first member 6, the external tool drives the operating part 13 to rotate in the opposite direction (usually counterclockwise) along the fifth direction, the side with a larger cross-sectional area of the tapered parting 125 gradually slides toward the side with a larger cross-sectional area of the tapered passage 124a, so that the tapered part 125 and the inner peripheral surface of the tapered passage 124a gradually become a clearance fit, so that the outer peripheral surface of the second expansion body 124 gradually return back radially inward, so that the second fastening boss 124b also gradually return back radially inwardly along the second expansion body 124 and is separated from the inner side surface of the first mounting hole 61 of the first member 6, so that the mounting part 12 can be easily pulled out from the mounting hole, and then the first connector 1 and the first member 6 can be detached.

In some embodiments, in order to make the external tool drive the operating part 13 more stably (rotate to drive a part of the first connector body to slide in a straight line direction, the cross-sectional area of the internal thread of the operating part 13 is larger than that of the connecting boss 11 Cross-sectional area, so that the operating part 13 can be installed on the driving external thread part 17 through the connecting boss 11, thereby improving the assembly efficiency of the first connector 1. In addition, when the external tool is a sleeve wrench, the cross-sectional area of the internal thread of the operating part 13 is larger than the cross-sectional area of the connecting boss 11 to ensure that the sleeve is sleeved on the operating part 13 after passing through the connecting boss 11, and ensures that the sleeve wrench drives the operating part 13 to rotate smoothly.

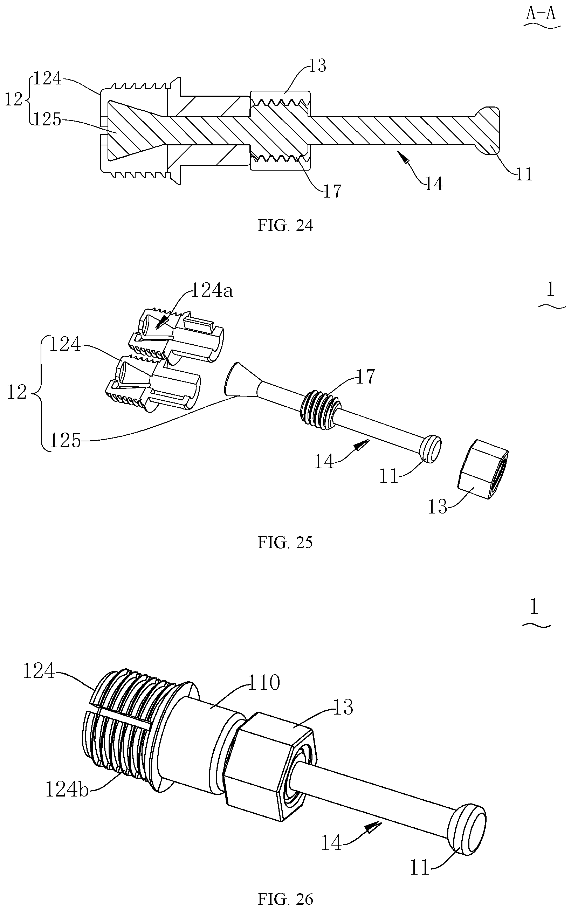

Furthermore, in some implementations of this embodiment 2, as shown in FIG. 26, when the second expansion body 124 is formed by combine with a plurality of sub-components, in order to prevent the dispersion phenomenon of the second expansion body 124 during using, the second fastening bosses 124b are placed on one side of the second expansion body 124, and the other side of the second expansion body 124 is sleeved with the protection sleeve 110. Wherein, the diameter of the protection sleeve 110 is larger than the driving external thread part 17, so that the protection sleeve 110 is used to surround multiple sub-components to ensure the connection stability of the second expansion body 124.

Furthermore, the first connector body in the embodiment 2 is an integrally rigid structure between the connecting boss 11 and the mounting part 12, so that the centerline of the connecting boss 11 and the centerline of the mounting part 12 are at the same straight line, the first connector 1 is generally suitable for the situation where the connecting surfaces of the first member 6 and the second member 7 are vertical or horizontal respectively, and has a strong heavy bearing capacity.

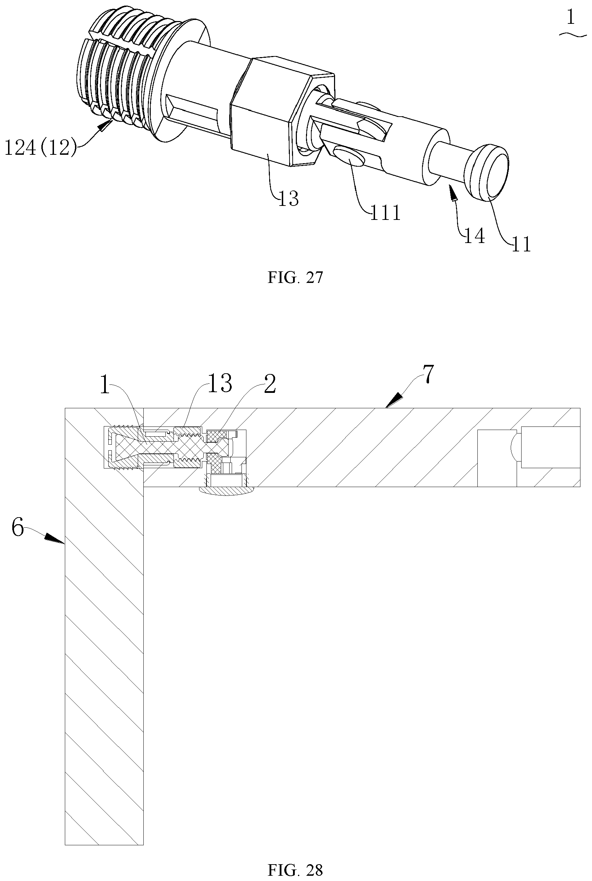

In some implements, when the first member 6 and the second member 7 are connected and attached to each other on an bevel plane, as shown in FIG. 27, the first connector body of the embodiment 2 has a hinged part 111 between the connecting boss 11 and the mounting part 12, the connecting boss 11 and the mounting part 12 rotate mutually through the hinged part 111, so that the connecting boss 11 and the mounting part 12 form a certain angle, such as 10°, 30°, 65°, 100°, 150°, or 180° etc., specifically adjust the angle between the connecting boss 11 and the mounting part 12 according to the bevel on which the first member 6 and the second member 7 are connected to each other, so that the mounting part 12 is firmly connected to the connection surface of the first member 6, at the same time the connecting boss 11 and the connecting groove 14 can be smoothly connected with the second connector 2 located on the connection surface of the second member 7, and finally the connection surface of the first member 6 and the second member 7 are attached to each other to realize invisible connection.

Wherein, the operating part 13 of the embodiment 2 of the invention is more closer to the mounting part 12 than the hinged part 111. In addition, for the structure and working principle of the hinged part 111 in the embodiment 2, please refer to the description of the hinged part 111 in the embodiment 1 above, and details are omitted here.

Based on the structure of the connecting assembly of embodiment 2 of the invention, as shown in FIG. 28, the invisible connection between the first member 6 and the second member 7 can be realized through the connecting assembly of embodiment 2 of the invention to form a connecting system, wherein, for the connecting system composed of the first connector 1 and the second connector 2 in this embodiment 2, please refer to the description of the connecting system in the above embodiment 1, and details are omitted here.

### Embodiment 3

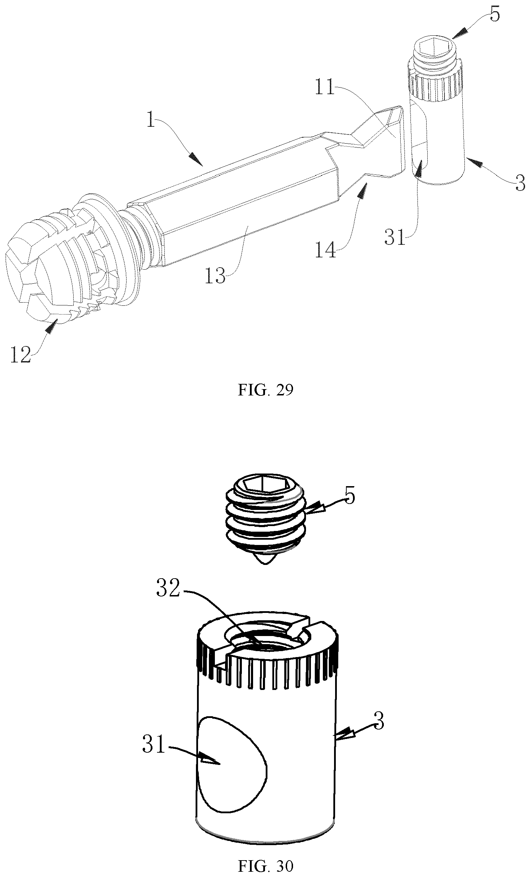

For the technical issues of low invisibility after two furniture panels are connected by using the 4-in-1 connector in the prior technology, embodiment 3 of the invention discloses a connecting assembly, as shown in FIGS. 29-33, the connecting assembly includes a third connector 3, a threaded fastener 5 and the first connector 1 as in the above-mentioned embodiment 1 or embodiment 2; a connecting passage 31 is opened on the outer surface of the third connector 3, and the top of third connector 3 is provided with a connecting hole 32 communicating with the connection passage 31, at least a part of the connecting groove 14 is inserted at the position where the connecting passage 31 communicates with the connecting hole 32, and the threaded fastener 5 is threaded connected to the connecting hole 32 inside, and one side of the threaded fastener 5 is inserted into the connecting groove 14. Wherein, the outer peripheral surface of the threaded fastener 5 in embodiment 3 of the invention has an external thread structure, such as a screw or a bolt or a threaded rod in the prior technology, the inner surface of the connecting hole 32 is provided with an internal thread structure that cooperates with the threaded fastener 5, rotate in the connecting hole 32 by driving the threaded fastener 5 so that one side of the threaded fastener 5 is inserted into the connecting groove 14, one side of the connecting groove 14 of the first connector 1 is restricted to being pulled out from the connecting passage 31 by the threaded fastener 5, therefore, the first connector 1 is firmly connected with the third connector 3 and the threaded fastener 5, further the first member 6 and the second member 7 are connected to each other.

Wherein, the invention does not limit the shape of the connecting boss 11 and the connecting groove 14, such as the connecting boss 11 can be circular or square or other irregular shapes, and the connecting groove 14 can be an annular groove shape or a square groove or V-groove etc. In some implements, as shown in FIG. 29, the connecting boss 11 of this embodiment 3 is in a flat square shape, the connecting groove 14 is in the shape of a V-shaped groove, the number of connecting grooves 14 is two, the two connecting grooves 14 are opposite placed on both sides of the first connector body, correspondingly, the shape of the cross section of the connecting passage 31 is the same as the connecting boss 11, so that the connecting boss 11 can be smoothly inserted into the connecting passage 31.

Other structures of the third connector 3 in embodiment 3 of the invention are the same as the bolt structure of the 4-in-1 connector in the prior technology, and details are omitted here.

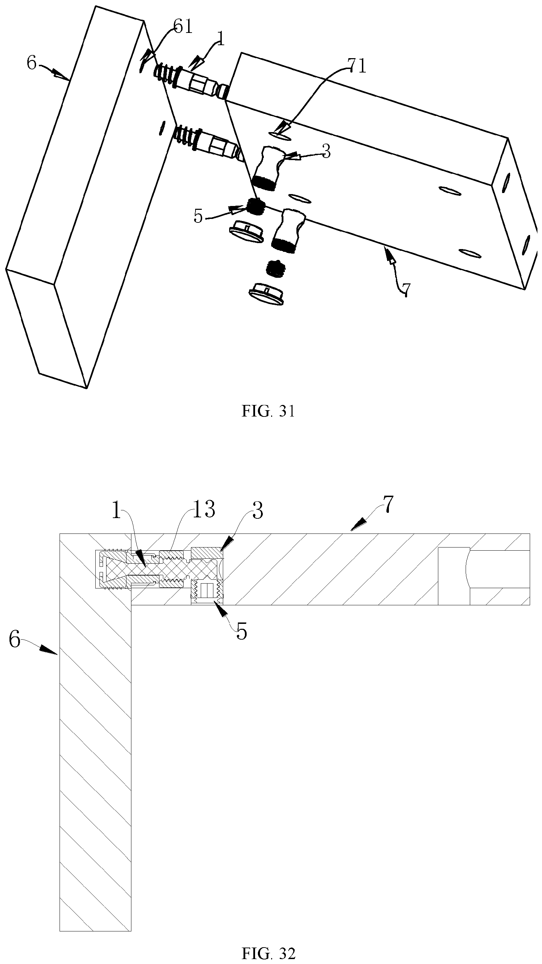

Based on the structure of the connecting assembly in embodiment 3 of the invention, the invisible connecting between the first member 6 and the second member 7 can be realized through the connecting assembly in embodiment 3 of the invention, to form a connecting system, as shown in FIGS. 31-33, the connecting system includes a first member 6, a second member 7, a first connector 1 and a third connector 3; wherein, the first member 6 is provided with a first mounting hole 61, and the mounting part is inserted into the first mounting hole 61; when the operating part rotates at a certain angle, the mounting part and the inner surface of the first mounting hole 61 are fastened each other; the bottom of the second member 7 is provided with a second mounting hole 71, and the side surface of the second member 7 is provided with a the mounting passage 72 connected to the second mounting hole 71, the third connector 3 is inserted in the second mounting hole 71 and makes the connecting passage 31 communicate with the mounting passage 72; at least a part of the connecting groove 14 passes through the mounting passage 72 to be inserted at the position where the connecting passage 31 communicates with the connecting hole 32, and the operating part is located in the mounting passage 72; the threaded fastener 5 is threaded connected in the connecting hole 32, and one side of the threaded fastener 5 is inserted into the connecting groove 14.

Wherein, the mounting manner between the first connector 1 and the first member 6 in embodiment 3 of the invention, please refer to the mounting manner between the first connector 1 and the first member 6 in embodiment 1 or embodiment 2 above, the details is omitted here.

In the description of this specification, references to the terms "one embodiment," "some embodiments", "exemplary embodiments", "for example", "suchas", or "some examples" are intended to mean that the a specific feature, structure, material, or characteristic described of embodiment or example is included in at least one embodiment or example of the invention. In this specification, schematic representations of the above terms do not necessarily refer to the same embodiment or example. Furthermore, the specific features, structures, materials or characteristics described can be combined in any suitable manner in any one or more embodiments or examples.

Although the embodiments of the invention have been shown and described, the general technician in this field can understand that various changes, modifications, substitutions and variants can be made to these embodiments without departing from the principle and purpose of the invention. The range of the invention is defined by the claims and their equivalents.

## Claims

1. A first connector, the first connector is used to cooperate with a second connector to realize the connection between a first member and a second member, or, the first connector is used to cooperate with a third connector and threaded fasteners to realize the connection between a first member and a second member, and the feature of the first connector is that the first connector comprises a first connector body, one side of the first connector body is protruded to form a connecting boss, and the other side of the first connector body is provided with a mounting part, and the mounting part is used to lock into a first mounting hole of the first member, the first connector body is fixed with an operating part between the connecting boss and the mounting part, the operating part is arranged at a distance from the connecting boss to form a connecting groove, and the operating part is driven by an external tool to drive at least a part of the first connector body to rotate;
wherein the outer side wall of the operating part at least has one operating plane or operating hole or operating bump or operating groove, or, the cross section of the operating part is adapted to the cross section of the sleeve.

2. The first connector according to claim 1, wherein the cross section of the operating part quadrilateral, hexagonal, oval, waist-circular, or petal-shaped.

3. The first connector according to claim 1, wherein the cross-sectional area of the operating part is larger than the cross-sectional area of the connecting boss.

4. The first connector according to claim 1, wherein the cross section of the connecting boss is circular, and the diameter of the connecting boss is 3-5.3 mm.

5. The first connector according to claim 1, wherein the connecting groove surrounds the outer side wall of the first connector body in a circumferential direction to form an annular groove.

6. The first connector according to any one of claims 1-5, wherein the mounting part comprises a first rotating part fixed to the first connector body, and the outer side wall circumference of the first rotating part is provided with external threads, or, along the lateral viewing direction of the first rotating part, the distance between the two ends of the first rotating part along a first predetermined linear direction is larger than a second predetermined linear direction;
wherein when the operating part is driven by an external tool to rotate, the first rotating part is rotated at a certain angle in a first mounting hole of the first member, the first rotating part fasten with the inner wall of the first mounting hole.

7. The first connector according to claim 6, wherein the cross-sectional area of the operating part is larger than the cross-sectional area of the first rotating part.

8. The first connector according to any one of claims 1-5, wherein the mounting part comprises a first expansion body and a second rotating part fixed with the first connector body, the second rotating part is to rotate into the first expansion body, and the outer side surface of the first expansion body is provided with at least one first fastening boss;
the outer surface of the second rotating part is provided with external threads; or, along the lateral viewing direction of the second rotating part, the distance between the two ends of the second rotating part along a third predetermined linear direction is larger than a fourth predetermined linear direction;
wherein when the operating part is driven by an external tool to rotate, the second rotating part rotates at a certain angle in the first expansion body, making at least one of the first fastening bosses to move along the radially outward expansion of the first expansion body, then making at least one of the first fastening bosses fasten with the surface side of the first mounting hole on the first member.

9. The first connector according to claim 8, wherein the first fastening boss is arranged at one side of the first expansion body, and the other side of the first expansion body is covered with a safety sleeve.

10. The first connector according to claim 1, wherein the first connector body has a hinged part between the connecting boss and the mounting part, and the connecting boss and the mounting part swivel through the hinged part.

11. A first connector, the first connector is used to cooperate with a second connector to realize the connection between a first member and a second member, or, the first connector is used to cooperate with a third connector and threaded fasteners to realize the connection between the first member and the second member, wherein the first connector comprises a first connector body, and one side of the first connector body protrudes to form a connecting boss, the other side of the first connector body is provided with a mounting part, and the mounting part is to lock into first mounting hole of the first member, and the first connector body is fixed with a driving external thread part between a connecting boss and the mounting part, and the driving external thread part is matched with an operating part with an internal thread, and the operating part is arranged at a distance from the connecting boss to form a connecting groove, the operating part is to be driven by an external tool to drive at least a part of the first connector body to move;
wherein the outer side wall of the operating part has at least one operating plane or operating hole or operating bump or operating groove, or, the cross section of the operating part is adapted to the cross section of the sleeve.

12. The first connector according to claim 11, wherein the cross section of the connecting boss is circular, and the diameter of the connecting boss is 3-5.3mm.

13. The first connector according to claim 11, wherein the mounting part comprises a second expansion body and a tapered part fixed to the first connector body, and the second expansion body inside is formed a tapered passage, the tapered part is movable in the tapered passage, and the outer surface of the second expansion body is provided with at least one second fastening boss;
wherein when the operating part is driven by an external tool to rotate, the tapered part moves a certain distance in the tapered passage, making at least one of the second fastening bosses to move along the radially outward expansion of the second expansion body, making at least one of the second fastening bosses fasten with the surface side of the first mounting hole on the first member.

14. The first connector according to claim 11, wherein the first connector body has a hinged part between the connecting boss and the mounting part, and the connecting boss and the mounting part swivel through the hinged part.

15. A connecting assembly, wherein it comprises a second connector for being installed on the second member and the first connector according to any one of claims 1-14;
the second connector can rotate in the directions of rotation between released position and locked position; a slot is opened on the side wall of the second connector, and at least one inner side wall of the slot is provided with a clamping arm; when the second connector is in released position, the connecting boss and the connecting groove is inserted into the slot from the opening of the slot; when the second connector is in locked position, the clamping arm restricts the connecting boss being pulled out from the slot.

16. The connecting assembly according to claim 15, wherein the second connector is a cam structure, and the diameter of the second connector is 6-11.5 mm.

17. A connecting assembly, wherein it comprises a third connector inserting on second member, a threaded fastener, and the first connector according to any one of claims 1-14;
a connecting passage is opened on the outer surface of the third connector, the top of the third connector is provided with a connecting hole connecting to the connecting passage, at least a part of the connecting groove is inserted into the place of the connecting passage connect to the connecting hole, the threaded fastener is connect to the connecting hole, and one side of the threaded fastener is inserted into the connecting groove.

18. A connecting system, wherein comprising a first member, a second member and a connecting assembly according to any one of claims 15-16;
the first member is provided with a first mounting hole, and the mounting part is inserted into the first mounting hole; when the operating part rotates at a certain angle, the mounting part is fasten in the inner side wall of the first mounting hole;
the bottom of the second member is provided with a second mounting hole, the side surface of the second member is provided with a mounting passage connecting to a mounting passage of the second mounting hole, and the second connector is rotating positioned on the second mounting hole; when the second connector is in released position, the connecting boss and the connecting groove are inserted into the slot of the second connector through the mounting passage, and the operating part is located in the mounting passage; when the second connector is in locked position, the clamping arm restricts the connecting boss being pulled out from the slot.

19. The connecting system according to claim 18, wherein the mounting passage comprises a first-level sub-passage and a second-level sub-passage connecting to each other, and the cross-sectional area of the first-level sub-passage is adapted as the cross-sectional area of the connecting boss, and the cross-sectional area of the second-level sub-passage is adapted to the cross-sectional area of the operating part.

20. A connecting system, wherein comprising a first member, a second member and the connecting assembly according to claim 17;
the first member is provided with a first mounting hole, and the mounting part is inserted into the first mounting hole; when the operating part rotates at a certain angle, the mounting part is fastened with the inner surface of the first mounting hole;
the bottom of the second member is provided with a second mounting hole, the side surface of the second member is provided with a mounting passage connecting with second mounting hole, the third connector is inserted into the second mounting hole connecting the connecting passage with the mounting passage; at least a part of the connecting groove passes through the mounting passage to be inserted in the place of the connecting passage connects to the connecting hole, and the operating part is located in the mounting passage; the threaded fastener is positioned into the connecting hole, one side of the threaded fastener is inserted into the connecting groove.
